**Europäisches Patentamt**

(19) **European Patent Office**

**Office européen des brevets**

(11) Numéro de publication: **0 132 004**
**B1**

(12) **FASCICULE DE BREVET EUROPEEN**

(45) Date de publication du fascicule du brevet: **22.11.90**

(51) Int. Cl.⁵: **A 01 K 39/012**

(21) Numéro de dépôt: **84200993.8**

(22) Date de dépôt: **09.07.84**

(54) **Mangeoire à niveau réglable pour l'élevage de la volaille.**

(30) Priorité: **13.07.83 IT 8495083**

(43) Date de publication de la demande:
**23.01.85 Bulletin 85/04**

(45) Mention de la délivrance du brevet:
**22.11.90 Bulletin 90/47**

(84) Etats contractants désignés:
**AT BE CH DE FR GB IT LI LU NL SE**

(56) Documents cités:
**BE-A- 672 848**
**DE-B-1 181 482**
**US-A-3 388 690**
**US-A-3 490 419**
**US-A-3 971 340**

(73) Titulaire: **SKA S.P.A.**
**Via Agosta, 3**
**I-36066 Sandrigo (Vicenza) (IT)**

(72) Inventeur: **Segalla, Ruggero**
**Via Zaguri, 59**
**I-36100 Vicenza (IT)**

(74) Mandataire: **Bettello, Luigi**
**Studio Tecnico Dott. Ing. LUIGI BETTELLO Via**
**Col d'Echele, 25**
**I-36100 Vicenza (IT)**

Courier Press, Leamington Spa, England.

EP 0 132 004 B1

**Description**

La présente invention a trait aux mangeoires pour l'élevage de la volaille de grande taille, des dindons en particulier, et elle vise plus spécialement celles qui comprennent un réceptacle circulaire associé à des moyens pour le réglage du niveau des aliments et qui sont destinées à être utilisées en nombre le long des lignes de distribution d'aliments prévues dans les locaux d'aviculture.

On sait que chacune de ces lignes de distribution est constituée en pratique par un conduit tubulaire orienté à l'horizontale au-dessus du sol et à l'intérieur duquel les aliments sont déplacés à l'aide de vis sans fin ou dispositifs similaires, depuis un silo central jusqu'aux mangeoires alignées au-dessous de la ligne considérée. Le réceptacle de chaque mangeoire est alimenté à travers un organe de distribution qui est relié au conduit sus-mentionné et qui est constitué essentiellement par un élément cylindrique creux dont la position, prévue réglable, par rapport au réceptacle détermine le niveau des aliments dans ce dernier, le réglage étant effectué en fonction de la taille (c'est-à-dire, en fait, de l'âge) des volailles auxquelles lesdits aliments sont destinés.

L'invention concerne une mangeoire telle que définie dans le préambule de la revendication 1. Une telle mangeoire est connue par le document US—A—3 490 419. Le document décrit et ligne de distribution dans laquelle le réglage du niveau des aliments dans chaque réceptacle est assuré moyennant une intervention séparée au niveau de l'organe de distribution de chaque mangeoire, un tel organe de distribution comprenant un élément de répartition et un organe mobile coulissant à l'extérieur de l'élément de répartition, ce qui implique évidemment une part de mains d'oeuvre considérable. De plus le réceptacle de certaines mangeoires connues à ce jour est rendu solidaire de l'organe de distribution au moyen de bras appropriés de soutien prévus rayonnants, l'organe précité étant lui-même relié au conduit horizontal de transport d'aliments. Au moyen d'elements en plusieurs pièces reliés entr'eux parmi des vis, comme prévu par le brevet USA N. 3.971.340.

Cette disposition implique bien entendu un inconvénient quant à la robustesse de la mangeoire, notamment lorsque celle-ci est destinée à l'alimentation de volailles de grande taille telles que les dindons; cet inconvénient est encore plus accentué du fait que l'organe de distribution est le plus souvent réalisé en matière plastique.

C'est à ces défauts qu'entend essentiellement remédier la présente invention, et ce en permettant la réalisation d'une mangeoire plus particulièrement destinée aux volailles d'élevage de grande taille, qui présente une robustesse parfaite prâce à la fixation particulière du receptacle d'aliments. Une réalisation particulière de l'invention rend en même temps possible le réglage du niveau des aliments moyennant une manoeuvre simple et rapide, susceptible d'être effectuée depuis un poste central du local d'aviculture.

La mangeoire suivant l'invention, du type destiné à être disposé en nombre le long des lignes de distribution des aliments dans les locaux et comprenant un réceptacle suspendu par une série de bras-supports rayonnants et au-dessus duquel est prévu un organe distributeur d'aliments prévu creux qui est relié et qui communique avec un conduit horizontal tubulaire pour le transport des aliments provenant d'un silo, lequel organe distributeur comprend lui-même un élément fixe de répartition et un élément pour le réglage du niveau des aliments conformé à la manière d'un manchon substantiellement cylindrique, mobile à l'extérieur de l'élément de répartition sus-mentionné, est caractérisée par les éléments de la partie carac-térisante de la revendication 1.

D'autres dispositions remarquables de la mangeoire ressortiront de la description qui va suivre en référence au dessin annexè, lequel dessin, donné à titre d'exemple, permettra de mieux comprendre l'invention, les caractéristiques qu'elle présente et les avantages qu'elle est susceptible de procurer:

Fig. 1 est une vue en perspective avec arrachements montrant l'agencement général de la mangeoire.

Fig. 2 est une vue schématique de côté d'une ligne de distribution équipée d'une série de mangeoires suivant fig. 1.

Fig. 3 illustre, à trois positions différentes, le réglage de l'une des mangeoires de fig. 2.

Sur ce dessin la référence 1 désigne globalement une mangeoire suivant l'invention. Cette mangeoire est constituée par un réceptacle suspendu 2 de type en soi connu, pourvu de bras-supports 3 et d'un organe 4 pour la distribution des aliments relié à un conduit tubulaire 5 orienté horizontalement et destiné au transport des aliments provenant d'un silo (non représenté).

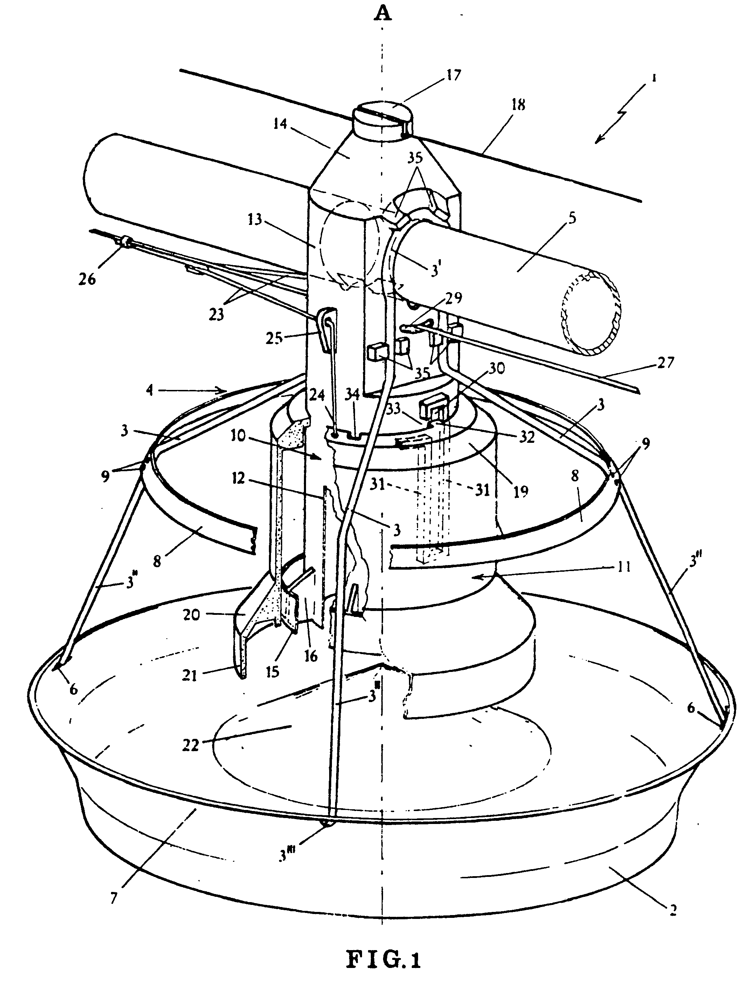

Comme montré en fig. 1 les bras-supports 3 sont constitués par deux tiges rondes en métal, dont chacune présente dans sa partie supérieure centrale une forme en U tourné vers le bas, de façon à constituer une sorte d'étrier 3' prenant appui sur le conduit 5, lequel étrier est solidaire de prolongements 3'' qui divergent radialement par rapport à l'axe vertical A de l'organe de distribution 4, adjacent audit étrier 3'. Les extrémités 3'' des bras 3 sont repliées et engagées à l'intérieur de boutonnières 6 ménagées dans le bord retourné 7 du réceptacle 2.

On observera que par suite de leur réalisation sous forme de tiges métalliques rondes, les bras-supports 3 sont susceptibles de se déformer élastiquement et d'être dégagés des boutonnières 6 moyennant une simple pression exercée sur leur extrémité 3'' suivant une direction substantiellement centripète par rapport à l'axe A. On a figuré en 8 un renfort annulaire apte à rigidifier la partie supérieure des bras 3 auxquels il est fixé par des rivets tels que 9. La structure ainsi obtenue est en conséquence totalement indépendante de l'organe de distribution 4.

Comme illustré en fig. 1 cet organe 4 est constitué d'une part par un élément fixe de répartition 10 relié à la façon en soi connue au conduit tubulaire 5, et d'autre part par un élément 11 pour le réglage du niveau des aliments, cet élément 11 étant disposé autour dudit élément fixé 10 de façon à pouvoir être déplacé co-axialement par rapport à celui-ci.

De manière plus précise l'élément de répartition 10 comprend un corps creux 12 substantiellement cylindrique pourvu d'une part vers le haut d'une tête 13 à section carrée ou rectangulaire dont le sommet 14 est convexe, d'autre part vers le bas d'une partie annulaire 15 de diamètre supérieur à celui du corps 12 et qui est reliée à celui-ci par des entretoises radiales 16.

Le sommet 14 comporte un support 17 à l'intérieur duquel est engagé le conducteur électrique usuel 18 destiné à interdire à la volaille de se percher sur le conduit 5. On notera par ailleurs que l'élément de réglage 11 est conformé substantiellement à la manière d'un manchon cylindrique dont le sommet 19 présente un profil tronconique, tandis que la base est dotée d'un fond 20 à profil extérieur lui-même tronconique; ce fond 20 est solidaire d'une partie inférieure 21 à profil cylindrique, propre à empêcher la volaille d'engager le bec dans la zone comprise entre la paroi extérieure dudit fond 20 et le bossage conique 22 prévu à la manière traditionnelle dans la partie centrale du réceptacle 2.

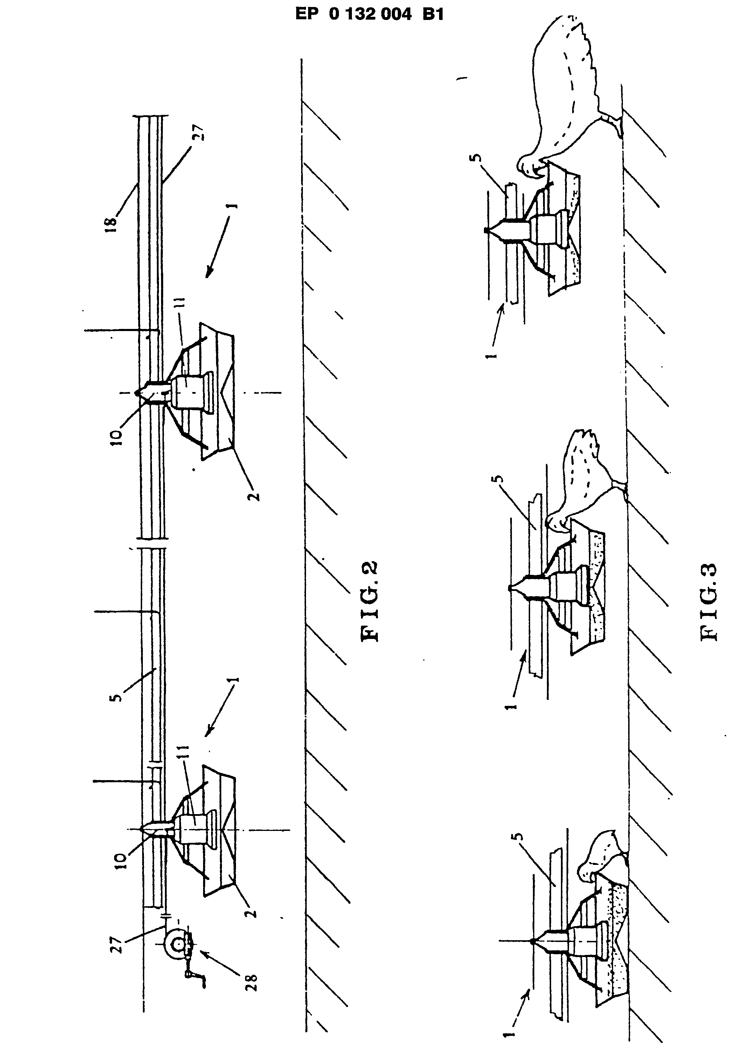

L'élément de réglage de niveau 11 est de la sortie susceptible de se déplacer le long de l'élément 10 et il est soutenu et actionné dans ce mouvement par un câble de manoeuvre constitué par une corde 23 repliée sur elle-même, dont les extrémités 24 sont fixées à la partie supérieure de cet élément 11 et qui est engagée à coulissement à travers deux oreilles perforées 25 faisant fonction de renvois et rapportées sur la tête 13 diamétralement à l'opposé l'une de l'autre par rapport à l'axe A. Ce cable de manoeuvre 23 est rendue solidaire, à l'aide de mors 26, d'un câble principal 27 orienté parallèlement au conduit 5 au-dessous de celui-ci; ce câble 27 est actionné au moyen d'un dispositif central approprié 28 (fig. 2) qui est ainsi susceptible d'assurer le réglage du niveau des aliments simultanément dans toutes les mangeoires 1.

On observera que le câble principal 27 travers librement la tête 13 de chaque mangeoire par le moyen d'une ouverture traversante 29 (fig. 1) orientée perpendiculairement à l'axe A et conformée à la manière d'une lumière afin de permettre les oscillations éventuelles de la mangeoire autour de l'axe du conduit 5 sans soumettre ledit câble à un effort de traction qui provoquerait le déplacement intempestif des éléments opérant le réglage du niveau des aliments dans les mangeoires voisines.

Comme illustré en fig. 1 la paroi externe du corps cylindrique creux 12 comporte deux guides verticaux 30 diamétralement opposés l'un à l'autre par rapport à l'axe A et dont chacun est défini par deux nervures profilées 31 entre lesquelles vient coulisser un relief 32 solidaire de la surface cylindrique extérieure de l'élément de réglage 11. A proximité de son sommet chaque guide 30 présente une ouverture latérale 33 qui permet le dégagement du relief 32 envisagé; ce dégagement (et de manière analogue l'engagement) est opéré en faisant tourner l'élément de réglage 11 autour de l'axe A. On notera à ce sujet que dans la partie supérieure de cet élément 11 sont prévues deux creusures 34 convenablement positionnées par rapport aux reliefs 32 afin de permettre le passage des oreilles 25 lors du montage (ou du dégagement) des éléments 10 et 11.

La liaison entre les bras-supports 3 et l'organe de distribution 4 est assurée à l'aide d'une série de bossages profilés 35 prévus sur la tête 13 à proximité des ouvertures pratiquées dans celle-ci pour loger les extrémités du conduit 5; c'est entre ces bossages 35 que vient s'adapter la partie supérieure 3' en forme d'étrier des bras-supports 3.

Fig. 3 fait bien apparaître le réglage du niveau des aliments dans les mangeoires, celles-ci étant susceptibles d'être élevées au fur et à mesure de la croissance de la volaille indépendamment du réglage sus-indiqué.

**Revendications**

1. Mangeoire à niveau d'aliments réglable pour l'élévage de la volaile, des dindons en particulier, du type destiné à être disposé en nombre le long des lignes de distribution des aliments dans les locaux et comprenant un réceptacle suspendu (2) soutenu par une série de bras-supports (3) rayonnants et au-dessus duquel est disposé un organe distributeur d'aliments prévu creux et qui communique avec un conduit horizontal tubulaire (5) pour le transport des aliments depuis un silo, lequel organe distributeur comprend lui-même un élément fixe de répartition (10) et un élément pour le réglage du niveau des aliments (11) conformé à la manière d'un manchon substantiellement cylindrique, mobile à l'extérieur de l'élément de répartition (10) sus-mentionné, caractérisé en ce qu'un couple de bras-support (3) avec leurs parties centrales en forme de "U", disposées respectivement contre les deux faces latérales opposées de la tête (13) à section rectangulaire de l'élément fixe de répartition (10) du distributeur d'aliments et tenues sur ces faces par des bossages (35) prevus sur cette téte, laquelle presente par ailleurs un passage pour le conduit tubulaire (5), de Façon que les bras-supports (3) s'appuyent contre cette tête et forment en même temps avec leur partie centrale en forme de "U" une sorte d'étrier (3') qui chevauche le conduit tubulaire, les extremités (3'') des bras-supports (3) accrochées à des boutonnières (6) pratiques sur le bord du réceptacle (2) étants réunis par un renfort annulaire (8), le renfort annulaire (8) étant placé à une distance des extrémités (3'') telle qu'il obblige les bras-supports à rester adherents à la tête (13) à section rectangulaire tout en permettant à ces extrémités (3'') de se dégager des boutonnières (6) lorsqu'elles sont soumises à une pression latérale.

2. Mangeoire à niveau d'aliments réglable pour l'élevage de la volaile, suivant la revendication 1, caractérisée en ce qu'elle est actionnée par un cable principal (27) disposé en dessous du conduit tubulaire (5), qui soutien le receptacle (2) et qui transporte les aliments distribués dans ce même receptacle (2), dans le but d'empêcher que la volaile puisse s'appuier sur le dit cable, deux câbles de manoeuvre (23) étant fixés par une extrémité à ce cable principal (27) et prédisposés en positions diamétralement opposées par rapport à la tête (13), l'autre extrémité de chaque câble de manoeuvre (23) étant fixée à la partie mobile (11) en vue de la manoeuvre de celle-ci par l'intermédiaire du cable principal (27).

3. Mangeoire suivant la revendication 2, caractérisée en ce que la paroi extérieure de l'élément de repartition (10) comporte à sa partie supérieure des bossages profilés (35) prévus au niveau de deux zones diamétralement opposées par rapport à l'axe vertical (A) de l'ensemble receptacle suspendu (2) et de l'organe distributeur, à proximité des ouvertures pratiquées pour l'engagement des extrémités du conduit tubulaire (5), ces bossages définissant de la sorte des logements propres à recevoir à emboîtement la partie supérieure en U (3') des bras-supports (3) et assurant la fixation mutuelle de ceux-ci et de l'élément de répartition (10).

4. Mangeoire suivant l'une quelconque des revendications 1 à 3, caractérisée en ce que les bras-supports (3) sont réunis les uns aux autres par un élément annulaire de renfort (8).

5. Mangeoire suivant l'une quelconque des revendications 1 à 4, caractérisée en ce que la paroi extérieure de l'élément de répartition (10) présente au moins deux nervures (31) qui définissent un guide vertical (30) à l'intérieur duquel est engagé à coulissement un relief (32) solidaire de la paroi cylindrique intérieure de l'élément de réglage de niveau (11), ce guide comportant une ouverture latérale (33) apte à permettre le dégagement du relief précité moyennant une rotation de l'un des éléments (10, 11) par rapport à l'autre.

6. Mangeoire suivant l'une quelconque des revendications 1 à 5, caractérisée en ce que chacun des câbles de manoeuvre est formé par une corde (23) repliée sur elle-même, dont les extrémités sont fixées au sommet de l'élément de réglage de niveau (11), en des points diamétralement opposés l'un à l'autre suivant l'axe vertical (A) de l'ensemble receptacle suspendu et de l'organe distributeur.

7. Mangeoire suivant la revendication 6, caractérisée en ce que les organes de renvoi sont constitués par deux oreilles perforées (25) prévues, au-dessus de l'élément de réglage de niveau (11), sur la paroi extérieure de l'élément de répartition (10) en étant diamétralement opposées l'une à l'autre suivant l'axe vertical (A), les câbles de manoeuvre (23) traversant librement lesdites oreilles.

8. Mangeoire suivant l'une quelconque des revendications 1 à 7, caractérisée en ce que le câble principal (27) est engagé à coulissement à l'intérieur d'une ouverture traversante (29) ménagée transversalement dans l'élément de répartition (10) au-dessous du conduit tubulaire (5).

9. Mangeoire suivant la revendication 8, caractérisé en ce que l'ouverture traversante est profilée à la manière d'une lumière (29).

**Patentansprüche**

1. Futtertrog mit Niveauregelung für die Aufzucht von Geflügel, insbesondere Truthähnen, wobei die Futtertröge dieser Art längs Futter-Verteilungsleitungen in Räumen angeordnet sind und ein jeder Futtertrog einen hängenden Aufnahmebehälter (2) aufweist, der von einer Reihe, strahlenförmig angeordneter Tragarme (3) gehalten wird und oberhalb des Aufnahmebehälters (2) ein hohles Futter-Verteilungsorgan vorgesehen ist, welches zum Transport des Futtermittels aus einem Silo mit einer waagerechten Rohrleitung (5) in Verbindung steht und das Futter-verteilerorgan ein ortsfestes Verteilerelement (10) sowie ein Element (11) für die Niveauregelung des Futtermittels aufweist, wobei das Element (11) die Form eines im wesentlichen zylinderförmigen Stutzens aufweist, der außerhalb des Verteilerelementes (10) bewegbar ist, dadurch gekennzeichnet, daß sich ein Paar der Tragarme (3) mit ihren U-förmig ausgebildeten mittleren Teilen gegen die einander gegenüberliegenden beiden Seitenflächen des Kopfes (13) rechteckigen Querschnittes des festen Verteilerelementes (10) für das Futtermittel anlegt und auf diesen Flächen mittels Nocken (35) gehalten wird, die auf dem Kopf (13) vorgesehen sind, welcher auch einen Durchgang für die Rohrleitung (5) aufweist, derart, daß sich die Tragarme (3) auf diesen Kopf (14) abstützen und dabei gleichzeitig mit ihrem U-förmigen Mittelteil einen Bügel (3') bilden, welcher die Rohrleitung (5) übergreift und daß die äußeren Enden (3'') der Tragarme (3) in knopflochartigen Aussparungen (6) im Rand des Aufnahmebehälters (2) eingehängt und in einem Verstärkungsring (8) gehalten sind, welcher in einem solchen Abstand zu den äußeren Enden (3'') liegt, daß er die Tragarme (3) am Kopf (13) rechteckigen Querschnittes festhält, jedoch ein Lösen aus den knopfartigen Aussparungen (6) der äußeren Enden (3'') zuläßt, wenn sie einem seitlichen Druck unterworfen sind.

2. Futtertrog nach Anspruch 1, dadurch gekennzeichnet, daß der Futtertrog von einem Hauptseil (27) unterhalb der Rohrleitung (5) betätigt ist, welche den Aufnahmebehälter (2) trägt und das zu verteilende Futtermittel in diesen transportiert mit dem Ziel, daß das Geflügel daran gehindert wird, sich gegen das Hauptseil (27) abzustützen und daß zwei Steuerseile (23) mit einem ihrer äußeren Enden an dem Hauptseil (27) befestigt sind und dem Kopf (13) diametral gegenüberliegen und an dem bewegbaren Element (11) derart befestigt sind, daß dieses mit Hilfe des Hauptseiles (27) steuerbar ist.

3. Futtertrog nach Anspruch 2, dadurch gekennzeichnet, daß die Außenwand des Verteilerelementes (10) in ihrem oberen Teil profilierte Nokken (35) aufweist, die in Höhe der beiden relativ zu der Vertikalachse (A) des aufgehängten Aufnahmebehälters (2) und des Verteilerorganes diametral einander gegenüberliegenden Zonen und in der Nähe der Öffnungen zur Aufnahme der Enden der Rohrleitung (5) liegen und daß diese Nocken (35) Sitze bilden, in welche der obere, U-förmigeausgebildete Teil (3') der Tragarme (3) eingeklemmt ist und auf diese Weise ein fester Halt derselben und des Verteilerelementes (10) gebildet wird.

4. Futtertrog nach einem der Ansprüche 1—3, dadurch gekennzeichnet, daß die Tragarme (3) über ein ringförmiges Verstärkungselement (8) miteinander verbunden sind.

5. Futtertrog nach einem der Ansprüche 1—4, dadurch gekennzeichnet, daß die äußere Wand des Verteilerelementes (10) zumindest zwei eine vertikale Führung (30) bildende Rippen (31) aufweist, daß in dieser Führung (30) eine Erhebung (32) gleitend bewegbar ist, welche mit der zylinderförmigen Innenwand des Elementes (11) für die Niveauregelung in Verbindung steht und daß diese Führung (30) eine seitliche Öffnung (33) aufweist, welche ein Lösen der Erhebung (32) zuläßt derart, daß eine Verdrehung der beiden Elemente (10, 11) relativ zueinander möglich ist.

6. Futtertrog nach einem der Ansprüche 1—5, dadurch gekennzeichnet, daß ein jedes Steuerseil (23) aus ungelenkten Schnüren besteht, deren äußeren Enden an der höchsten Stelle des Elementes (11) für die Niveauregelung in einander diametral gegenüberliegenden Punkten entsprechend der Vertikalachse (A) und der Gesamtanordnung befestigt sind, welche den aufgehängten Aufnahmebehälter (2) und das ·Verteilerorgan umfaßt.

7. Futtertrog nach Anspruch 6, dadurch gekennzeichnet, daß die Unlenkorgane von zwei perforierten Laschen (25) gebildet sind, welche oberhalb· des Elementes (11) für die Niveauregelung an der Außenwand des Verteilerelementes (10) relativ zu der Vertikalachse (A) einander diametral gegenüberliegend angeordnet sind und daß die Steuerseile (23) durch die mit Ösen versehenen Laschen (25) frei hindurchgeführt sind.

8. Futtertrog nach einem der Ansprüche 1—7, dadurch gekennzeichnet, daß das Hauptseil (27) durch das Innere einer Durchgangsöffnung (29) mit Spiel hindurchgeführt ist, welche in dem Verteilerelement (10) unterhalb der Rohrleitung (5) in Querrichtung sich erstreckt.

9. Futtertrog nach Anspruch 8, dadurch gekennzeichnet, daß die Durchgangsöffnung (29) die Form eines Schlitzes aufweist.

**Claims**

1. Adjustable feed level trough for the rearing of poultry, especially turkeys, of a type intended to be arranged along feed distribution lines on the premises and comprising a suspended receptacle [2] held by a series of radiating support arms [3], above which there is a hollow feed dispenser unit which is connected by a tubular horizontal conduit [5] for the transportation of a feed from a silo, the said dispenser unit itself comprising a fixed distribution element [10] and a mobile element [11] for adjusting the level of the feed, shaped in the manner of a largely cylindrical sleeve, on the outside of the said distribution element [10], characterized by the fact that a pair of support arms [3] with their central parts forming a "U" is arranged against the two lateral opposing faces of the rectangular cross-sectioned head [13] of the fixed distribution element of the feed dispenser and held on these faces by bosses [35] provided on this head, which furthermore provides a passage for the tubular conduit [5], such that the support arms rest against this head, forming at the same time with their "U"-shaped central part a type of stirrup [3'] which straddles the tubular conduit with the extremities [3''] of the support arms [3] hooked into holes [6] made on the edge of the receptacle [2], being joined together by a reinforcing ring [8] which is placed at a distance from the extremities [3''], such that it forces the support arms to adhere to the rectangular cross-sectioned head [13], whilst enabling these extremities [3''] to be disengaged from the holes [6] when they are subjected to lateral pressure.

2. Adjustable feed level trough for the rearing of poultry, characterized by the fact that it is activated by a principal cable [27] arranged below the tubular conduit [5] which holds the receptacle [2] and which transports the feed dispensed into this same receptacle [2], in order to prevent the bird from supporting itself on the said cable, with two manoeuvring cables [23] being fixed at one end fo the principal cable [27] and arranged in diametrically opposed positions on the head [13], with the other end of each manoeuvring cable [23] being fixed to the mobile part [11] in order that the mobile part can be manoeuvred by means of the principal cable [27].

3. Feed trough according to claim 2, characterized by the fact that the upper part of the outer wall of the distribution element [10] exhibits profiled bosses [35] in two areas which are diametrically opposed in relation to the vertical axis (A) of the suspended receptacle assembly [2] and of the dispenser unit, in the vicinity of orifices made for the engagement of the ends of the tubular conduit [5], these bosses thereby defining recesses able to accommodate the U-shaped upper part [3'] of the support arms [3], ensuring the fixing of the support arms and of the distribution element [10].

4. Feed trough according to any of claims 1 to 3, characterized by the fact that the support arms [3] are joined together by a reinforcing ring [8].

5. Feed trough according to any of claims 1 to 4, characterized by the fact that the external wall of the distribution element [10] has at least two ribs [31] which define a vertical guide [30] inside which a lug, solid with the interior cylindrical wall of the level adjuster element [11], is able to slide, this guide having a lateral opening [33] through which the aforesaid lug can be disengaged by rotating one of the elements [10, 11] in relation to the other.

6. Feed trough according to any of claims 1 to 5, characterized by the fact that each of the manoeuvring cables is formed by a cord [23] folded back on itself, whose ends are fixed to the top of the level adjuster element [11] at points diametrically opposed to each other in relation to the vertical axis (A) of the suspended receptacle assembly and of the dispenser unit.

7. Feed trough according to claim 6, characterized by the fact that the guiding elements consist of two perforated lugs [25] arranged above the level adjuster element [11] on the external wall of the distribution element [10], being diametrically opposed to each other in relation to the vertical axis (A), the manoeuvring cables [23] freely passing through the said lugs.

8. Feed trough according to any of claims 1 to 7, characterized by the fact that the principal cable [27] slides inside a traversing opening [29] made transversely through the distribution element [10] below the tubular conduit [5].

9. Feed trough according to claim 8, characterized by the fact that the traversing opening [29] is in the shape of an oblong slot.

A

FIG.1

FIG.2

FIG.3

EP 0 132 004 B1